Europäisches Patentamt

European Patent Office

Office européen des brevets

(11) Publication number: **0 190 354**
**B1**

## EUROPEAN PATENT SPECIFICATION

(45) Date of publication of patent specification: **07.12.88**

(51) Int. Cl.⁴: **B 29 C 47/02,** B 29 C 71/02

(21) Application number: **85902674.2**

(22) Date of filing: **06.06.85**

(86) International application number:
**PCT/JP85/00323**

(87) International publication number:
**WO 86/00564 30.01.86 Gazette 86/03**

(54) PROCESS FOR PRODUCING RELEASE PAPER.

(30) Priority: **02.07.84 JP 137544/84**

(43) Date of publication of application:
**13.08.86 Bulletin 86/33**

(45) Publication of the grant of the patent:
**07.12.88 Bulletin 88/49**

(84) Designated Contracting States:
**DE FR GB IT NL**

(56) References cited:
**AU-A- 527 512**
**JP-B-56 052 159**
**JP-B-57 045 790**
**US-A-3 663 649**
**US-A-3 804 919**
**US-A-4 288 479**

**CHEMICAL ABSTRACTS, vol. 83, no. 14, 6th
October 1975, page 111, abstract 116410b,
Columbus, Ohio, US; & JP - A - 75 49 368 (UBE
INDUSTRIES LTD.) 02-05-1975**

(73) Proprietor: **GOYO PAPER WORKING CO. LTD.
13-18, Anryu 4-chome, Suminoe-ku
Osaka-shi, Osaka-fu 559 (JP)**

(72) Inventor: **OHARA, Shuzo
14-11, Daiwanishi 2-chome Kawanishi-shi
Hyogo-ken. 666-01 (JP)**
Inventor: **KITAMURA, Ryoichi
5-1-1011, Ayazono 4-chome Takaishi-shi
Osaka-fu 592 (JP)**

(74) Representative: **Vossius & Partner
Siebertstrasse 4 P.O. Box 86 07 67
D-8000 München 86 (DE)**

**Description**

The present invention relates to a method of manufacturing a release paper, according to the preamble of claim 1, by an extrusion laminating process, and more particularly to a method of efficiently and economically manufacturing a release paper by an extrusion laminating process.

The manufacturing method of silicone release paper mainly used hitherto is coating, the method consisting in forming a laminate of a resin layer of a polyolefin on a substrate such as paper and coating a layer of release agent on its surface; see for example JP—B—56—52159. The release agent used in this method consists of, for instance, polymethyl hydrogen siloxane and vinyl group-containing polydimethyl siloxane. An addition reaction takes place in the presence of platinum catalysts and under heating and the reaction product sets to form a release film.

Meanwhile, like in the present invention, there is a method of forming a release layer on a substrate by an extrusion laminating process in a single stretch. When this method is used, the laminated resin itself has a release property. As such as release resin, an elastomeric ethylene-α-olefin copolymer is used, which is suitable for acrylic adhesives; see for example JP—B—57—45790, upon which the preamble of claim 1 is based.

When the former coating process is adopted, the polyethylene resin is first laminated on the substrate and then coating of the silicone release agent is carried out in a separate step. Thus, the working process is in two steps, this being not advantageous in terms of equipment, time and economy. Furthermore, the release agent applied by coating is generally used together with an organic solvent, which is accompanied by heavy problems such as risk of fire, explosion and environmental pollution.

On the other hand, in the latter extrusion laminating process using the elastomeric ethylene-α-olefin copolymer there is a problem concerning the heat resistance or resistance to solvent etc. at the time of coating and of unevenness of the release potential with regard to acrylic adhesive and the release potential becomes heavier with the lapse of time. The elastomeric ethylene-α-olefin copolymer is difficult to extrude when it is used alone. Hence it is used as a mixture with polyethylene, but the release effect is lost more and more with a decreasing proportion of the elastomer, whereas the increase of its proportion results in stronger characteristics of the elastomer, causing loss of film strength and giving rise to working difficulties such as blocking.

The use of siloxane-ethylene polymer block copolymers as a surfactant in olefine polymers is known from US—A—3,663,649.

The present inventors tried a method of extruding the release agent hitherto used in the coating process in combination with polyethylene to eliminate the defects of both methods. However, lacking compatibility and extreme difficult is of the extrusion due to poor film forming stretching property turned out, and curing was extremely difficult even if lamination should be feasible. As they continued their studies intensity, they discovered that extrusion could be markedly improved by adding a certain substance to the compound, and that curing could be easily accomplished effectively and could thus complete the present invention.

The present invention relates to a method of manufacturing a release paper wherein a polyolefin resin is coated on a substrate such as paper, a fabric or a film and a silicone release agent is coated on the laminate thus obtained, characterized in that a mixture of a polyolefin and a silicone release agent compatible therewith comprising a reaction product of a polymethyl hydrogen siloxane, a vinyl group-containing polydimethyl siloxane and at least one olefin or polyolefin having one or more double-bonds is extruded onto the substrate, the laminate obtained is heat treated in order to bleed the release agent contained in the mixed layer of the laminate onto the surface of the mixed layer and the thus localized release agent is fixed by curing.

As the release agent used for the method of the present invention a silicone release agent compatible with polyolefins is suited which is a reaction product of a polymethyl hydrogen siloxane, a vinyl group-containing polydimethyl siloxane and at least one olefin or polyolefin having one or more double-bonds as the third component.

As olefins containing one or more double-bonds are cited those having 16—24 carbon atoms such as octadecene, while as polyolefins are cited, for instance, 1,4-polybutadiene or its mixture with 1,2-polybutadiene, polyisoprene or polybutene and mixtures thereof.

An example of a method for manufacturing the release agent consists in mixing the polymethyl hydrogen siloxane (including polymethyl hydro-dimethyl siloxane copolymer), the vinyl group-containing polydimethyl siloxane and the above-mentioned third component, adding di-tertiary butyl peroxide as catalyst, proceeding with the reaction under heating and stopping the reaction simultaneously with recognition of the start of gelling. Alternatively, the polymethyl hydrogen siloxane and the third component may be preliminary caused to react under heating with di-tertiary butyl peroxide as catalyst and the reaction product is further caused to react with the vinyl group-containing polydimethyl siloxane or the third component may be simultaneously added and caused to react under heating with di-tertiary butyl peroxide as catalyst and the reaction may be stopped simultaneously with recognition of the start of gelling. If the reaction is stopped before start of gelling, the later curing becomes imperfect, while, if gelling is allowed to go ahead too far, the localization of the bleeding onto the surface of the release agent becomes difficult. After stopping of the reaction, the reaction product is refined by vacuum treatment for elimination of unreacted volatile components.

The release agent synthesized by the above-mentioned method is mixed with the polyolefin resin at a rate of approx. 1 to 10 weight %, more preferably 2—5 weight % based on the polyolefin resin, and kneaded and pelletized in a pelletizer to give the resin for the mixture layer (resin for extrusion). Through adjusting of the amount added, it can be effective as release agent for various adhesives and urethane hard foam.

Examples for polyolefins used in the method of the present invention are polyethylene, polypropylene, 4-methyl pentene-1 resin, ethylene-vinyl acetate copolymer resin and mixtures thereof. As polyethylene linear low density polyethylene with a denisty of 0.910—0.935 g/cm$^3$ is particularly suited in low speed peeling property and, since it can be heat treated and cured at a high temperature, it is advantageous in that it can be heat treated and cured in a short time. For accelerating the bleeding localization positively, it is possible to add an ethylene-vinyl acetate copolymer resin or a polyvinyl ether which acts on polyolefin as a sort of plasticizer.

The resin for the release layer thus obtained can be extruded onto the substrate using an extrusion laminator and a release layer is formed thereby on the substrate. As the substrate for the present invention, paper, a fabric, a film, a metallic foil and laminates thereof can be used.

The laminate formed on the substrate is heat-treated. Heat treatment is done by allowing the laminate to stand for approximately 10—60 minutes after its surface temperature has reached approximately 70—120°C. By heat treatment the release agent contained in the mixture layer bleeds toward the surface of the mixture layer to be localized. Thus the state in which the release agent is coated on the surface of the polyethylene layer as in the conventional process is simulated. This is confirmed by measurements of FT—ATR—IR.

The localized release agent is perfectly cured and fixed by a catalytic treatment using of, for instance, chloroplatinic acid. The curing temperature is preferably approximately 100—130°C and the curing time approximately 1—60 min. Hence in a range in which the temperature and time of the heat treatment and the curing overlap localization and curing may be carried out simultaneously. The amount of chloroplatinic acid is preferably in the range of $2\times10^{-2}$—$3\times10^{-1}$ mg/m$^2$. The fixing of the release agent by curing is not limited to the use of platinum as catalyst but fixing by curing with the use of other catalysts, ultraviolet rays, an electron beam or gamma rays is also feasible. The method of applying the catalyst is not limited to surface coating.

According to the preesnt invention, an adhesion enhancing layer such as a layer of polyethylene may be provided between the release agent and the substrate for improving the adhesive strength therebetween.

Hereafter the present invention is explained by examples and control examples, but, needless to say, the present invention is not limited thereby. Parts and percentage given hereafter mean weight parts and weight percentage unless otherwise specified.

Example 1

6.6 parts of polymethyl hydrogen siloxane ($\bar{P}$=5—7), 90.1 parts of vinyl group-containing polydimethyl siloxane ($\bar{P}$=150, vinyl group 0.7%) and 3.3 parts of polybutadiene ($\overline{MW}$=1600, 1,4 bonding accounting for 99%) were charged into a reactor, 0.286 parts of di-tertiary butyl peroxide was added as catalyst when the mixture was heated to 120°C, and reaction was allowed to proceed for 10 h. at 120°C. The reactor was cooled simultaneously with the start of gelling to stop the reaction. The reaction product was treated for refining for 5 h. at 110°C at a reduced pressure of 5 mmHg for elimination of unreacted volatile components.

The resulting release agent was added in an amount of 3% to low-density polyethylene ("M-10P," of Mitsui Polychemical, MI:9.5, density: 0.917 g/cm$^3$) and pellets for the mixed layer were prepared in a pelletizer at a die temperature of approx. 200°C. The same low-density polyethylene as used for the mixed layer was used to form an adhesion enhancing layer.

As substrate 73 g/m$^2$ "Clupak" unbleached craft paper was used. The polyethylene for the adhesion enahncing layer was extruded from an ordinary co-extrusion laminator at a die temperature of 310°C with simultaneous extrusion of the pellets for the mixed layer at a die temperature of 280°C, and a 3-layer laminate of substrate-adhesion enhancing layer-mixed layer was thus prepared. The thickness of the mixed layer was 20 µm and that of the adhesion enhancing layer was 20 µm. The properties of the extruded product are shown in Table 2.

Then the 3-layer laminate was cut in sheet form and was treated for 10 min at 120°C with the release layer upside. After the heat treatment the surface of the mixed layer was coated with $1.7\times10^{-1}$ mg/m$^2$ chloroplatinic acid (0.001% IPA solution) and cured again for 20 min at 120°C to obtain a release paper.

The release potential and residual adhesion strength of the release paper thus obtained were measured as follows.

Adhesive tape

For the test an acrylic adhesive craft tape ("Elm tape", Soken Kako) was cut to a size of 25 mm width and 210 mm length.

3

EP 0 190 354 B1

Measuring conditions:
The above adhesive tape was stuck to the above-mentioned release paper by pressing it with a rubber roller of 4.5 kg in weight one stroke and back at a speed of 5 mm/s. The release potential and residual adhesive strength were measured under the following conditions. After sticking of the tape, the measurement was taken after ageing for 20 hours under a pressure of 20 g/cm$^2$ in an atmosphere of 70°C and 65% RH.

Measuring method
The force required for low speed (0.3 m/min) peeling was measured using an autograph tension tester ("Strograph-R", Toyo Seiki) and that for high speed (3 m/min, 20 m/min) peeling was measured using a high speed peeling tester (Tester Sangyo) both at a peeling angle of 180°. The measurement was taken under the conditions of 23°C and 65% RH.
The results of the measurement are shown in Table 1.

Example 2
In Example 1, polybutadien was replaced by polyisoprene ($\overline{MW}$=29000) and the reaction conditions were changed to 120°C×14 h. With the resulting release paper a test was made in the same way as described in Example 1. The results are shown in Table 1.

Example 3
The polymethyl hydrogen siloxane used in Example 1 was mixed with polybutene ($\overline{MW}$=1450) and di-tertiary butyl peroxide was added as catalyst. After 2 h of preliminary reaction at 120°C, the vinyl-group containing polydimethyl siloxane used in Example 1 was caused to react for 4 h at 120°C. A release paper was obtained in otherwise the same way, and was tested in the same way as described in Example 1. The mixing ratio of the individual reaction components was the same as in Example 1 and the coating rate of chloroplatinic acid was $1.8\times10^{-1}$ mg/m$^2$. The results are shown in Table 1.

Example 4
In Example 3, polybutene was replaced by octadecene. After 2 h of preliminary reaction at 120°C, the reaction was conducted for 3 h at 120°C. A release paper was prepared in otherwise the same way and was tested in the same way as described in Example 1. The coating rate of chloroplatinic acid was $1.6\times10^{-1}$ mg/m$^2$. The results are shown in Table 1.

Control example 1
The polybutadiene used in Example 1 alone was mixed at the same ratio (0.099%) with low-density polyethylene and a 3-layer laminate was obtained in the same way. It was heat-treated for 10 min at 120°C and was tested in the same way as described in Example 1. The results are shown in Table 1. Aptitude for lamination was satisfactory.

Control example 2
In Control example 1, the polybutadiene was replaced by the polyisoprene used in Example 2 and a release paper was prepared in otherwise the same way. The results are shown in Table 1. Aptitude for lamination was satisfactxry.

Control example 3
In Control example 1, the polybutadiene was replaced by the polybutene used in Example 3 and a release paper was prepared in otherwise the same way. The results are shown in Table 1. Aptitude for lamination was satisfactory.

Control example 4
In control example 1, the polybutadiene was replaced by the octadecene used in Example 4 and a release paper was prepared in otherwise the same way. The results are shown in Table 1. Aptitude for lamination was satisfactory.

Control example 5
The low-density polyethylene used as base resin in Example 1 only was extruded onto the same substrate for preparation of a laminate, which was tested in the same way as described in Example 1. The results are shown in Table 1. Aptitude for lamination was satisfactory.

Control example 6
A mixture of 1.7 parts of the mixture of polymethyl hydrogen siloxane and 98.3 parts of vinyl group-containing polydimethyl siloxane was added in an amount of 2.901% to low-density polyethylene in the same way as described in Example 1 to prepare pellets for a mixed layer.
Laminating was carried out by extruding polyethylene for an adhesion enhancing layer from a coextrusion laminator at a die temperature of 310°C, and the layer thickness was adjusted to 20 µm. With

4

# EP 0 190 354 B1

the pellets for a mixture layer an attempt was made for extruding at a die temperature of 280°C with an expected layer thickness of 20 μm. The extrusion rate was substantially reduced and subject to marked fluctuation, and although extrusion was somehow carried out, the film thickness was subject to marked uneveness as well as laminate film width. The resulting laminate was hardly usable in practice. The extrusion performance is shown in Table 2.

Curing was not possible although an attempt to cure was made under the same conditions as in the present invention. The silicone release agent in the release layer migrated into the adhesive tape layer, resulting in lowering of the release performance.

As is apparent from the above results, the conventional silicone release agent intended for coating has no aptitude for lamination, cannot be cured and is not usable as release agent in the present invention.

## TABLE 1

| | | 3rd Component | Chloroplatinic acid (mg/m$^2$) | Peeling rate (m/min) (1) | | | Residual adhesion coefficient (2) (0.3 m/min) |
|---|---|---|---|---|---|---|---|
| | | | | 0.3 | 3 | 20 | |
| Example | 1 | 1,4-polybutadiene | $1.7 \times 10^{-1}$ | 40 | 100 | 95 | 95 |
| " | 2 | Polyisoprene | $1.7 \times 10^{-1}$ | 40 | 115 | 105 | 98 |
| " | 3 | Polybutene | $1.8 \times 10^{-1}$ | 35 | 98 | 100 | 96 |
| " | 4 | Octadecene | $1.6 \times 10^{-1}$ | 37 | 100 | 96 | 94 |
| Control example | 1 | 1,4-polybutadiene | — | 380 | 630 | 690 | 75 |
| " | 2 | Polyisoprene | — | 370 | 700 | 720 | 70 |
| " | 3 | Polybutene | — | 310 | 530 | 500 | 72 |
| " | 4 | Octadecene | — | 340 | 600 | 550 | 71 |
| " | 5 | No addition | — | 340 | 530 | 450 | 78 |

(1) Measured values are all in unit of g/25 mm.
(2) Residual adhesion coefficient=(A/B)×100
where:
A=Adhesive strength of standard adhesion tape after contact with the release paper
B=Adhesive strength of standard adhesion tape before contact with the release paper

## TABLE 2

| | Release agent of present invention (Example 1) | Conventional release agent (Control example 6) |
|---|---|---|
| Compatibility w. polyethylene | Good | Poor |
| Extrusion rate in extrusion | Slightly reduced. | Considerably decreased, and subject to marked fluctuation |
| Catching of resin by screw | Good | Bad due to screw slippage |
| Laminating | No film deflection. Good elongation. | Some film deflection. Increased "neck in" due to decrease of extrusion rate. |
| Aptitude for lamination (Overall evaluation) | Positive | Negative |

5

As is apparent from Table 1, an olefin or polyolefin having one or more double-bonds of the present invention is a minus factor in release effect but as seen from Table 2, it is apparent that it plays an important role with regard to the aptitude for lamination in the process of manufacture of a release paper by the extrusion method. According to the present invention, are two components of the polyorganosiloxane type assuming a three-dimensionally crosslinked structure when fixed by curing exhibit the release effect.

According to the present invention, the compatibility with the polyolefin, the film forming property and the stretching property were improved through the reaction of an olefin or polyolefin having one or more double bonds as third component with release components. The extrusion properties can be astonishingly improved. Also since the release agent is localized and fixed at a high concentration on the surface of the release layer by the heat treatment and curing, a remarkable release effect can be attained despite the small proportion of the release agent in relation to the polyolefin. A manufacturing method for a release paper which is cheap and high in productivity is provided.

The release paper of the present invention can be widely used as release paper for adhesive tapes tack paper and stickers, as "process paper" for synthetic leatherette and urethane.

**Claims**

1. A method of manufacturing a release paper wherein a polyolefin resin is coated on a substrate, such as paper, a fabric or film, and a silicone release agent is coated on the laminate thus obtained, characterized in that a mixture of a polyolefin and a silicone release agent compatible therewith comprising a reaction product of a polymethyl hydrogen siloxane, a vinyl group-containing polydimethyl siloxane and at least one olefin or polyolefin having one or more double-bonds is extruded onto the substrate,

the laminate obtained is heat treated in order to bleed the release agent contained in a mixed layer of laminate onto the surface of the mixed layer and the thus localized release agent is fixed by curing.

2. The method of claim 1, wherein said polyolefin having one or more double-bonds is 1,4-polybutadiene, a mixture of 1,4-polybutadiene and 1,2-polybutadiene, polyisoprene or polybutene.

3. The method of claim 1, wherein said polyolefin is polyethylene, polypropylene, 4-methylpentene-1 resin, ethylene-vinyl acetate copolymer resin or a mixture thereof.

4. The method of claim 1, wherein said release agent is mixed with the polyolefin in an amount of approximately 1—10 weight percent.

5. The method of claim 1, wherein said heat treatment is carried out by leaving said laminate for approximately 10—60 min after its surface temperature has reached approximately 70—120°C.

**Patentansprüche**

1. Verfahren zur Herstellung eines Ablösepapiers, wobei ein Polyolefinharz auf ein Substrat, wie Papier, ein Gewebe oder eine Folie aufgebracht wird, und ein Silikon-Ablösemittel auf das sor erhaltene Laminat aufgebracht wird, dadurch gekennzeichnet, daß ein Gemisch aus einem Polyolefin und einem damit verträglichen Silikon-Ablösemittel, welches ein Umsetzungsprodukt aus einem Polymethylhydrogensiloxan, einem Vinylgruppen-enthaltenden Polydimethylsiloxan und mindestens einem Olefin oder Polyolefin mit einer oder mehreren Doppelbindungen auf das Substrat extrudiert, das erhaltene Laminat zur Ausblutung des in der Mischschicht des Laminates enthaltenen Ablösemittels auf die Oberfläche der Mischschicht wärmebehandelt und das so lokalisierte Ablösemittel durch Aushärtung fixiert wird.

2. Verfahren nach Anspruch 1, wobei das Polyolefin mit einer oder mehreren Doppelbindungen 1,4-Polybutadien, ein Gemisch aus 1,4-Polybutadien und 1,2-Polybutadien, Polyisopren oder Polybuten ist.

3. Verfahren nach Anspruch 1, wobei das Polyolefin Polyäthylen, Polypropylen, 4-Methylpenten-1-Harz, Äthylen-Vinylacetat-Copolymerharz oder ein Gemisch davon ist.

4. Verfahren nach Anspruch 1, wobei das Ablösemittel mit dem Polyolefin in einer Menge von etwa 1 bis 10 Gew.-% vermischt wird.

5. Verfahren nach Anspruch 1, wobei die Wärmebehandlung dadurch durchgeführt wird, daß man das Laminat etwa 10 bis 60 Minuten beläßt, nachdem seine Oberflächentemperatur etwa 70 bis 120°C erreicht hat.

**Revendications**

1. Un procédé de fabrication d'un papier de décollage dans lequel on revêt d'une résine polyoléfinique un susbtrat tel qu'un papier, un tissu ou une pellicule et on revêt le stratifié ainsi obtenu d'un agent antiadhérant de type silicone, caractérisé en ce que l'on extrude sur le substrat un mélange d'une polyoléfine et d'un agent antiadhérant de type silicone qui lui est compatible, comprenant un produit de la réaction d'un polyméthylhydrogénosiloxane, d'un polydiméthylsiloxane content un groupe vinyle et d'au moins une oléfine ou polyoléfine ayant une ou plusieurs doubles liasons, on traite à chaud le stratifié obtenu pour faire exsuder l'agent antiadhérant contenu dans une couche mixte du stratifié à la surface de la couche mixte et on fixe par durcissement cet agent antiadhérant localisé.

2. Le procédé de la revendication 1, dans lequel ladite polyoléfine ayant une ou plusieurs doubles

## EP 0 190 354 B1

liaisons est le 1,4-butadiène, un mélange de 1,4-polybutadiène et de 1,2-polybutadiène, le polyisoprène ou le polybutène.

3. Le procédé de la revendication 1, dans lequel ladite polyoléfine est le polyéthylène, le polypropylène, une résine de 4-méthylpentène-1, une résine de copolymère d'éthlène-acétate de vinyle ou un de leurs mélanges.

4. Le procédé de la revendication 1, dans lequel ledit agent antiadhérant est mélangé avec la polyoléfin en une quantité d'approximativement 1 à 10% en poids.

5. Le procédé de la revendication 1, dans lequel on effectue ledit traitement à chaud en laissant ledit stratifié pendant environ 10 à 60 minutes après que sa température superficielle ait atteint approximativement 70 à 120°C.

7